# EUROPÄISCHE PATENTSCHRIFT

(11) **EP 4 192 722 B1**
(45) Veröffentlichungstag und Bekanntmachung des Hinweises auf die Patenterteilung: **07.08.2024**
(21) Anmeldenummer: 21735921.5
(22) Anmeldetag: 23.06.2021
(51) Int. Cl.: B62J 43/20, B62M 6/90

(54) **VERRIEGELUNGSVORRICHTUNG ZUM FIXIEREN EINES AKKUS AN EINEM RAHMEN EINES ZWEIRADS**
LOCKING DEVICE FOR FIXING A BATTERY ON A FRAME OF A BICYCLE
DISPOSITIF DE VERROUILLAGE PERMETTANT DE FIXER UNE BATTERIE SUR UN CADRE D'UNE BICYCLETTE

(30) Priorität: 06.08.2020 DE 102020209928
(43) Veröffentlichungstag der Anmeldung: 14.06.2023
(73) Patentinhaber: Robert Bosch GmbH, 70442 Stuttgart (DE)
(72) Erfinder: KUNERT, Peter, 72805 Lichtenstein (DE)
(86) Internationale Anmeldenummer: PCT/EP2021/067145
(87) Internationale Veröffentlichungsnummer: WO 2022/028770

(56) Entgegenhaltungen:
- DE-A1- 102019 204 013
- DE-B3- 102016 213 903
- DE-B3- 102019 203 541

## Beschreibung

### Stand der Technik

Die vorliegende Erfindung betrifft eine Verriegelungsvorrichtung zum Fixieren eines elektrischen Energiespeichers an einem Rahmen oder dgl. eines Zweirads, insbesondere eines Zweirads mit elektrischem Antrieb, wie beispielsweise einem E-Bike oder einem Pedelec. Ferner betrifft die vorliegende Erfindung einen elektrischen Energiespeicher mit einer derartigen Verriegelungsvorrichtung sowie ein Zweirad, insbesondere ein Zweirad mit elektrischen Antrieb, mit einer derartigen Verriegelungsvorrichtung.

Die Erfindung betrifft hierbei insbesondere Zweiradfahrzeuge auf Fahrradbasis, insbesondere sog. Pedelecs oder E-Bikes, bei denen neben einem Muskelkraft basierten Antrieb auch ein Elektroantrieb unterstützend und/oder ausschließlich wirken kann.

Bei derart fahrradbasierten Zweiradfahrzeugen ist der elektrische Energiespeicher häufig entnehmbar, um eine Aufladung des elektrischen Energiespeichers getrennt vom Zweiradfahrzeug zu ermöglichen. Für eine verbesserte Optik sind elektrische Energiespeicher häufig direkt in einen Rahmen eines Zweiradfahrzeugs integriert. Hierbei sind häufig sehr große Rahmenausschnitte erforderlich, welche eine Rahmensteifigkeit des Rahmens negativ beeinflussen. Hier wurde vorgeschlagen, dass aufgrund der besseren Steifigkeitsverhältnisse die elektrischen Energiespeicher von oben oder unten in ein Rahmenrohr eingeschoben werden und in der eingeschobenen Position fixiert werden. Zur Fixierung können beispielsweise Spannhebel verwendet werden. Aufgrund der Positionierung und Länge der elektrischen

Energiespeicher kann es hierbei häufig zu Kollisionen mit anderen Bauteilen des Zweiradfahrzeugs kommen.

Das Dokument DE102019204013 offenbart eine gattungsgemäße Verriegelungsvorrichtung.

### Offenbarung der Erfindung

Die erfindungsgemäße Verriegelungsvorrichtung zum Fixieren eines elektrischen Energiespeichers an einem Rahmen oder dgl. eines Zweiradfahrzeugs mit den Merkmalen des Anspruchs 1 weist demgegenüber den Vorteil auf, dass eine kombinierte Dreh- und Kippbewegung möglich ist, so dass ein notwendiger Schwenkbereich für einen Hebel der Verriegelungsvorrichtung sehr klein gehalten werden kann. Dadurch kann eine deutlich verbesserte Handhabung beim Entnehmen und Wiedereinsetzen des elektrischen Energiespeichers in den Rahmen erreicht werden. Durch den kleinen Handhabungsradius der erfindungsgemäßen Verriegelungsvorrichtung ist es somit möglich, dass, wenn der elektrische Energiespeicher beispielsweise in einem Rahmenrohr eines Zweiradfahrzeugs angeordnet ist, eine für den elektrischen Energiespeicher nutzbare Rahmenrohrlänge vergrößert werden kann, so dass z.B. ein Energiespeicher mit größerer Kapazität einbaubar ist oder der Energiespeicher flacher ausgeführt sein kann.

Dies wird erfindungsgemäß dadurch erreicht, dass die Verriegelungsvorrichtung eine Hebelanordnung umfasst, welche eine Grundplatte, einen Hebel und eine Kulissenführung zwischen der Grundplatte und dem Hebel aufweist. Die Kulissenführung weist einen ersten und zweiten Lagerpunkt sowie eine erste und zweite Kurvenbahn auf. Jeweils ein Lagerpunkt ist mit einer der Kurvenbahnen in Wirkverbindung. Dabei ist der Hebel mittels der Kulissenführung eingerichtet, derart an der Grundplatte zu schwenken, dass der Hebel einen ersten Schwenkvorgang ausschließlich um den ersten Lagerpunkt ausführt und anschließend einen zweiten Schwenkvorgang ausschließlich um den zweiten Lagerpunkt ausführt. Somit wird eine Art Reihenschaltung der beiden Schwenkvorgänge erreicht, nämlich zuerst ausschließlich um den ersten Lagerpunkt und anschließend ausschließlich um den zweiten Lagerpunkt. Somit ist ein gleichzeitiges Schwenken um beide Lagerpunkte nicht möglich, sondern der Schwenkvorgang erfolgt seriell. Somit kann eine Bewegung des Hebels relativ zur Grundplatte mit deutlich reduziertem Schwenkbereich erreicht werden, wobei eine Kollisionsgefahr des Hebels während des Schwenkvorgangs mit anderen Bauteilen eines Zweiradfahrzeugs minimiert ist.

Die Unteransprüche zeigen bevorzugte Weiterbildungen der Erfindung.

Weiter bevorzugt ist die erste Kurvenbahn und/oder die zweite Kurvenbahn jeweils ein ununterbrochener Bogen. Der ununterbrochene Bogen weist vorzugsweise einen konstanten Radius auf.

Besonders bevorzugt ist ein Radius der ersten und zweiten Kurvenbahn gleich. Hierdurch kann ein einfach zu berechnender Bahnverlauf der Schwenkbewegung des Hebels relativ zur Grundplatte ermöglicht werden. Eine besonders kompakte Anordnung zwischen Grundplatte und Hebel wird erreicht, wenn vorzugsweise ein Abstand zwischen dem ersten und zweiten Lagerpunkt gleich lang ist wie ein Radius der ersten und zweiten Kurvenbahn. Hierdurch wird eine minimale Hüllkurve der Schwenkbewegung des Hebels an der Grundplatte erreicht.

Gemäß einer bevorzugten Ausgestaltung der Erfindung weist die erste Kurvenbahn einen ersten Endanschlag auf. Der Endanschlag ist beispielsweise durch einen Endbereich der Kurvenbahn, welche in eine Oberfläche der Grundplatte oder des Hebels eingebracht ist, definiert. Weiter bevorzugt weist die zweite Kurvenbahn einen zweiten Endanschlag auf.

Um ein einfaches Lösen des Hebels von der Grundplatte zu ermöglichen, sind die erste und zweite Kurvenbahn derart angeordnet, dass diese sich an einem Schnittpunkt schneiden. Besonders bevorzugt ist am Schnittpunkt der ersten und zweiten Kurvenbahn eine Öffnung an einer Seite der Kurvenbahn vorgesehen, so dass der Hebel einfach aus der Kulissenführung ausgefädelt werden kann.

Weiter bevorzugt ist eine Länge der ersten Kurvenbahn gleich einer Länge der zweiten Kurvenbahn. Dadurch wird erreicht, dass die Schwenkvorgänge um den ersten und zweiten Lagerpunkt jeweils gleich lang sind.

Gemäß einer weiteren bevorzugten Ausgestaltung der vorliegenden Erfindung umfasst die Verriegelungsvorrichtung ferner ein Sicherungselement. Das Sicherungselement ist eingerichtet, im geschlossenen Zustand der Verriegelungsvorrichtung diese an einem Rahmen oder dgl. eines Zweiradfahrzeugs zu fixieren. Das Sicherungselement kann vorzugsweise ein Haken oder dgl. sein. Das Sicherungselement ist weiter bevorzugt benachbart zu einem der Lagerpunkte angeordnet. Gemäß einer besonders bevorzugten Ausgestaltung der Erfindung ist das Sicherungselement entfernbar am Hebel angeordnet. Dadurch kann eine Ausgestaltung der Verriegelungsvorrichtung derart sein, dass durch Lösen und Entfernen des Sicherungselements ein weiterer Schwenkvorgang des Hebels möglich ist.

Besonders bevorzugt weist die Grundplatte einen Anschlag auf, welcher eine maximale Schwenkbewegung des Hebels begrenzt. Wenn der Anschlag der Grundplatte mit dem entfernbaren Sicherungselement in Eingriff kommt, kann beispielsweise durch das Entfernen des Sicherungselements vom Hebel ein zusätzlicher, weiterer Schwenkweg des Hebels ermöglicht werden, welcher beispielsweise eine vollständige Trennung des Hebels von der Grundplatte ermöglicht. Dies kann beispielsweise für Reinigungszwecke hilfreich sein. Somit kann das Sicherungselement vorzugsweise als anschlagendes Element am Anschlag der Grundplatte verwendet werden und durch Entfernen des Sicherungselements ein einfaches komplettes Demontieren der Verriegelungsvorrichtung ermöglicht werden.

Die ersten und zweiten Lagerpunkte sind vorzugsweise an der Grundplatte angeordnet und die ersten und zweiten Kurvenbahnen sind vorzugsweise am Hebel angeordnet. Alternativ sind die ersten und zweiten Lagerpunkte am Hebel angeordnet und die ersten und zweiten Kurvenbahnen sind an der Grundplatte angeordnet. Bei beiden Alternativen ist bevorzugt, dass die Kurvenbahnen als Nuten ausgebildet sind und die Lagerpunkte vorzugsweise als Zylinder. Bevorzugt sind die Kurvenbahnen und die Lagerpunkte dabei jeweils einstückig mit dem jeweiligen Bauteil hergestellt, beispielsweise aus einem Kunststoffmaterial oder einem Metallmaterial.

Weiter bevorzugt sind die Kurvenbahnen und Lagerpunkte doppelt an der Verriegelungsvorrichtung vorgesehen, z.B. an zwei entgegengesetzten Seiten der Verriegelungsvorrichtung.

Gemäß einer weiteren bevorzugten Ausgestaltung der Erfindung umfasst die Verriegelungsvorrichtung ferner eine Rastvorrichtung zum lösbaren Verrasten des Hebels an der Grundplatte. Die Rastverbindung kann beispielsweise mittels eines Federelements vorgespannt sein und durch eine Kippbewegung außer Eingriff, beispielsweise an einer Hinterschneidung, gebracht werden. Ein Einrasten erfolgt vorzugsweise über eine Rampe oder dgl. beim Zurückstellen des Hebels in automatischer Weise.

Weiter bevorzugt umfasst die Verriegelungsvorrichtung ein Schloss, um ein unbefugtes Öffnen der Verriegelungsvorrichtung zu verhindern. Somit kann der Hebel der Hebelanordnung erst nach Öffnen des Schlosses geschwenkt werden.

Weiter bevorzugt umfasst die Verriegelungsvorrichtung eine Fixiereinrichtung, welche an der Grundplatte ausgebildet ist und eingerichtet ist, die Grundplatte an einem elektrischen Energiespeicher zu fixieren. Die Fixiereinrichtung kann beispielsweise Durchgangslöcher und Schraubbolzen oder dgl. umfassen.

Die Verriegelungsvorrichtung ist vorzugsweise ein separat handelbares Bauteil. Alternativ kann die Grundplatte auch ein integraler Bestandteil eines Gehäuses des elektrischen Energiespeichers sein. Dann kann nach einem Öffnen der Verriegelungsvorrichtung diese mitsamt dem elektrischen Energiespeicher aus einem Rahmen oder dgl. entnommen werden.

Ferner betrifft die vorliegende Erfindung einen Energiespeicher, umfassend eine erfindungsgemäße Verriegelungsvorrichtung.

Weiter bevorzugt betrifft die Erfindung ein Zweiradfahrzeug, insbesondere ein mit Muskelkraft und/oder mit einem elektrischen Antrieb antreibbares Fahrrad, umfassend einen elektrischen Energiespeicher und eine erfindungsgemäße Verriegelungsvorrichtung. Der elektrische Energiespeicher ist vorzugsweise in ein Rahmenteil des Zweiradfahrzeugs integriert und die Verriegelungsvorrichtung fixiert den elektrischen Energiespeicher ohne zusätzliche bewegliche Elemente.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht eines Zweiradfahrzeugs mit einem elektrischen Antrieb gemäß einem bevorzugten Ausführungsbeispiel der Erfindung,

- Figur 2: eine schematische, perspektivische Explosionsdarstellung einer Verriegelungsvorrichtung gemäß einem Ausführungsbeispiel der Erfindung,
- Figur 3: eine schematische Seitenansicht der Verriegelungsvorrichtung von Figur 2 an einem elektrischen Energiespeicher in einem verrasteten Ausgangszustand,
- Figur 4: eine Seitenansicht der Verriegelungsvorrichtung in einem ersten Öffnungsschritt,
- Figur 5: eine Seitenansicht der Verriegelungsvorrichtung in einem zweiten Öffnungsschritt, und
- Figur 6: eine schematische Darstellung der Verriegelungsvorrichtung zur Trennung eines Hebels von einer Grundplatte der Verriegelungsvorrichtung.

### Bevorzugte Ausführungsform der Erfindung

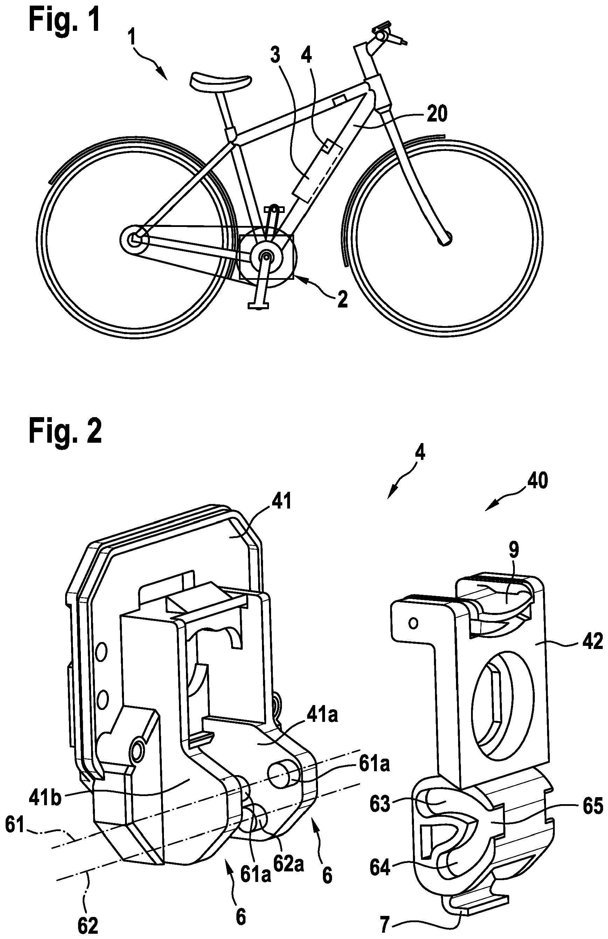

Nachfolgend wird unter Bezugnahme auf die Figuren 1 bis 6 ein Zweiradfahrzeug 1 mit einer Verriegelungsvorrichtung 4 gemäß einem bevorzugten Ausführungsbeispiel der Erfindung im Detail beschrieben.

Es sei angemerkt, dass unter einem Zweiradfahrzeug insbesondere ein Fahrrad mit Elektroantrieb verstanden wird, beispielsweise ein Pedelec, bei dem der Elektroantrieb nur zugeschaltet wird, wenn ein Fahrer in die Pedale tritt, oder ein elektrisches Fahrrad, welches auch ohne Pedalieren einen Betrieb des Elektroantriebs erlaubt.

Wie aus Figur 1 ersichtlich ist, ist ein elektrischer Antrieb 2 im Bereich eines Tretlagers des als Fahrrad ausgebildeten Zweiradfahrzeugs angeordnet. Ferner umfasst das Zweiradfahrzeug 1 einen elektrischen Energiespeicher 3, welcher in ein Rahmenrohr 20, zumindest teilweise, integriert ist. An einem Endbereich des elektrischen Energiespeichers 3 ist die Verriegelungsvorrichtung 4 angeordnet, welche den elektrischen Energiespeicher 3 am Rahmenrohr 20 sicher verriegelt.

Durch Entriegeln der Verriegelungsvorrichtung 4 kann der elektrische Energiespeicher 3 aus dem Rahmenrohr 20 entnommen werden.

Die Verriegelungsvorrichtung 4 ist im Detail aus den Figuren 2 bis 6 ersichtlich.

Wie aus der perspektivischen Ansicht von Figur 2 ersichtlich ist, umfasst die Verriegelungsvorrichtung 4 eine Hebelanordnung 40 mit einer Grundplatte 41 und einem Hebel 42. Ferner umfasst die Hebelanordnung 40 eine Kulissenführung 6, welche zwischen der Grundplatte 41 und dem Hebel 42 ausgebildet ist.

Die Kulissenführung 6 umfasst eine erste Lagerachse 61 und eine zweite Lagerachse 62. Weiterhin umfasst die Kulissenführung 6 eine erste Kurvenbahn 63 und eine zweite Kurvenbahn 64.

Die erste und zweite Lagerachse 61, 62 sind parallel zueinander angeordnet. Die Kulissenführung 6 ist an zwei entgegengesetzten Seiten der Verriegelungsvorrichtung 4 doppelt ausgeführt.

Die Grundplatte 41 umfasst einen ersten Schenkel 41a und einen zweiten Schenkel 41b. Wie aus Figur 2 ersichtlich ist, sind erste zylindrische Lagerbolzen 61a und zweite zylindrische Lagerbolzen 62b an beiden Seiten der Schenkel 41a, 41b angeordnet, so dass diese zueinander gerichtet sind. Entsprechend sind am Hebel 42 an beiden Seiten jeweils eine erste und zweite Kurvenbahn 63, 64 ausgebildet.

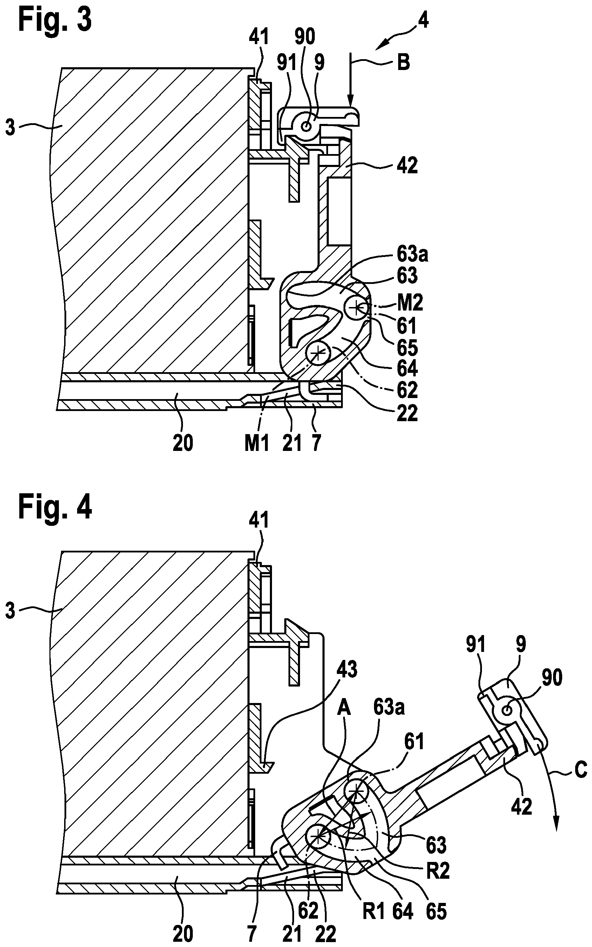

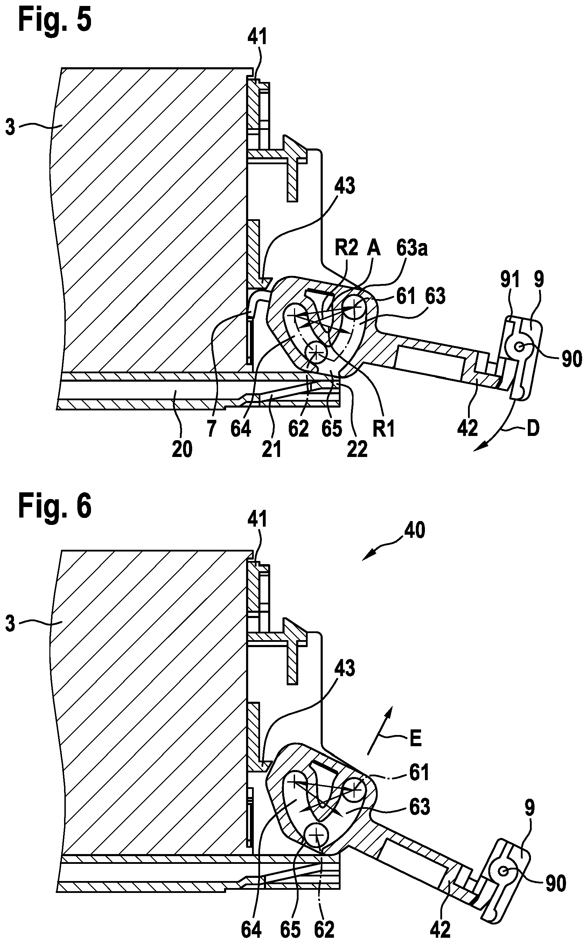

Der Hebel 42 ist nun mittels der Kulissenführung 6 eingerichtet, derart an der Grundplatte 41 zu schwenken, dass der Hebel 42 zuerst einen ersten Schwenkvorgang ausschließlich an der ersten Lagerachse 61 ausführt und im Anschluss daran einen zweiten Schwenkvorgang ausschließlich um die zweite Lagerachse 62 ausführt. Dies ist im Detail aus den Figuren 4 und 5 ersichtlich.

Hierzu muss ausgehend vom verriegelten Zustand, welcher in Figur 3 gezeigt ist, zuerst eine Rastvorrichtung 9, beispielsweise mit einem Finger um eine Drehachse 90 gedreht werden, damit ein Haken 91 aus einer Hinterschneidung gelöst wird (Pfeil B).

Anschließend erfolgt, wie in Figur 4 gezeigt, eine Rotation des Hebels 42 um die erste Lagerachse 61 (Pfeil C). Wie ein Vergleich der Positionen zwischen den Figuren 3 und 4 zeigt, bewegt sich der Hebel 42 entlang der ersten Kurvenbahn 63 bis zu einem Endanschlag 63a der ersten Kurvenbahn 63, welches als Anschlag dient. Wie aus Figur 4 ersichtlich ist, verbleibt die zweite Lagerachse 62 unverändert in der zweiten Kurvenbahn 64. Somit erfolgt ein erster Schwenkvorgang ausschließlich um die erste Lagerachse 61.

Ausgehend von der Zwischenposition in Figur 4 erfolgt dann ein zweiter Schwenkvorgang des Hebels 42 ausschließlich, um die zweite Lagerachse 62, was aus einem Vergleich zwischen den Figuren 4 und 5 deutlich wird (Pfeil D). Figur 5 zeigt dabei einen Endpunkt des zweiten Schwenkvorgangs. Die erste Lagerachse 61 an den Zylinderbolzen verbleibt dabei in der Endposition am Endanschlag 63a in der ersten Kurvenbahn 63, so dass der zweite Schwenkvorgang ausschließlich durch eine Relativbewegung um die zweite Lagerachse 62 erfolgt.

Am Hebel 42 ist an einem Ende ein Sicherungselement 7 in Form eines Hakens vorgesehen und wie aus Figur 3 ersichtlich ist, greift das Sicherungselement 7 durch eine Öffnung 21 im Rahmenrohr 20 hinter eine Hinterschneidung 22 am Rahmenrohr 20. Figur 3 zeigt den verriegelten und mittels der Rastvorrichtung 9 verrasteten Zustand zwischen dem Hebel 42 und der Grundplatte 41.

Durch den ersten Schwenkvorgang kommt das Sicherungselement 7 außer Eingriff mit der Hinterschneidung 22 und wird durch die Öffnung 21 im Rahmenrohr 20 herausgedreht (vgl. Figur 4).

Wie weiter aus Figur 5 ersichtlich ist, wird der zweite Schwenkvorgang dadurch beendet, dass das Sicherungselement 7 gegen einen Anschlag 43 an der Grundplatte 41 anschlägt. Dies ist in diesem Ausführungsbeispiel der maximal mögliche Schwenkvorgang bei montiertem Sicherungselement 7.

Wie aus Figur 6 ersichtlich ist, ist jedoch das Sicherungselement 7 entfernbar vom Hebel 42 vorgesehen. Dadurch ist es möglich, dass auch eine Trennung des Hebels 42 von der Grundplatte 41 erfolgt. Hierbei sind an einem Schnittpunkt der ersten Kurvenbahn 63 mit der zweiten Kurvenbahn 64 eine Öffnung 65 vorgesehen. Wie in Figur 6 schematisch dargestellt, kann dann ohne das Sicherungselement 7 der Hebel 42 von der Grundplatte 41 entnommen werden (Pfeil E).

Die Verriegelungsvorrichtung 4 kann beispielsweise mittels Schraubbolzen oder dgl. am elektrischen Energiespeicher 3 befestigt werden. Alternativ ist es auch möglich, dass beispielsweise die Grundplatte 41 der Verriegelungsvorrichtung 4 ein integraler Bestandteil des elektrischen Energiespeichers 3 ist, beispielsweise eines Gehäuses des elektrischen Energiespeicherspeichers 3.

Die erste Kurvenbahn 63 weist einen ersten Radius R1 auf und ist ausschließlich bogenförmig ausgebildet. Dabei liegt ein Mittelpunkt M1 der ersten Kurvenbahn 63 in der zweiten Lagerachse 62. Die zweite Kurvenbahn 64 ist ebenfalls ausschließlich bogenförmig mit einem zweiten Radius R2 ausgebildet. Dabei liegt ein Mittelpunkt M2 der zweiten Kurvenbahn 64 in der ersten Lagerachse 61. Dabei sind der erste Radius R1 und der zweite Radius R2 gleich groß. Dadurch ist auch ein Abstand A zwischen der ersten Lagerachse 61 und der zweiten Lagerachse 62 gleich dem ersten Radius R1 und gleich dem zweiten Radius R2.

Der Mittelpunkt M1 der ersten Kurvenbahn 63 liegt somit in der zweiten Kurvenbahn 64 und der Mittelpunkt M2 der zweiten Kurvenbahn 64 liegt in der ersten Kurvenbahn 63. Die beiden Mittelpunkte M1, M2 liegen dabei jeweils im Bereich der geschlossenen Enden der ersten und zweiten Kurvenbahn 63, 64. Hierbei fallen dann die Mittelpunkte der Kurvenbahnen 63, 64 mit der ersten Lagerachse 61 bzw. der zweiten Lagerachse 62 zusammen, wenn die jeweiligen Zylinderbolzen sich in der Endposition in der ersten bzw. zweiten Kurvenbahn 63, 64 befinden.

Somit ist bei der Verriegelungsvorrichtung 4 durch die geschickte Anordnung der Kulissenführung 6 zwischen dem Hebel 42 und der Grundplatte 41 keine gemeinsame gleichzeitige Bewegung um die erste Lagerachse 61 und die zweite Lagerachse 62 möglich. Der Gesamtschwenkvorgang wird in einen ersten Schwenkvorgang und einen zweiten Schwenkvorgang unterteilt, wobei im ersten Schwenkvorgang ausschließlich ein Schwenken um die erste Lagerachse 61 erfolgt und im zweiten Schwenkvorgang ausschließlich ein Schwenken um die zweite Lagerachse 62 erfolgt. Dadurch wird eine Bewegung des Hebels 42 relativ zur Grundplatte 41 derart gesteuert, dass für die Bewegung ein möglichst kleiner Raum nötig ist. Dadurch kann ein kompakter Aufbau erreicht werden und der elektrische Energiespeicher 3 kann trotz der Verriegelungsvorrichtung 4 in das Rahmenrohr 20 integriert werden.

Somit kann bei der Bewegung des Hebels 42 eine Kollision mit anderen Bauteilen des Zweiradfahrzeugs 1 vermieden werden.

Es sei angemerkt, dass es selbstverständlich auch möglich ist, dass die Kulissenführung 6 so ausgestaltet ist, dass die Lagerbolzen am Hebel 42 angeordnet sind und die Kurvenbahnen an der Grundplatte 41.

## Patentansprüche

1. Verriegelungsvorrichtung zum Fixieren eines elektrischen Energiespeichers (3) an einem Rahmen (20) eines Zweiradfahrzeugs, **gekennzeichnet durch**:
- eine Hebelanordnung (40) mit einer Grundplatte (41), einem Hebel (42) und einer Kulissenführung (6) zwischen der Grundplatte (41) und dem Hebel (42),
- wobei die Kulissenführung (6) eine erste Lagerachse (61) und eine zweite Lagerachse (62) sowie eine erste Kurvenbahn (63) und eine zweite Kurvenbahn (64) aufweist,
- wobei der Hebel (42) mittels der Kulissenführung (6) eingerichtet ist, derart, um die Grundplatte (41) zu schwenken, dass der Hebel (42) einen ersten Schwenkvorgang ausschließlich um die erste Lagerachse (61) ausführt und anschließend einen zweiten Schwenkvorgang ausschließlich um die zweite Lagerachse (62) ausführt.

2. Verriegelungsvorrichtung nach Anspruch 1, wobei die erste Kurvenbahn (63) und die zweite Kurvenbahn (64) jeweils ein ununterbrochener Bogen ist.

3. Verriegelungsvorrichtung nach Anspruch 2, wobei ein erster Radius (R1) der ersten Kurvenbahn (63) gleich einem zweiten Radius (R2) der zweiten Kurvenbahn (64) ist.

4. Verriegelungsvorrichtung nach Anspruch 3, wobei ein Abstand (A) zwischen der ersten Lagerachse (61) und der zweiten Lagerachse (62) gleich dem ersten Radius (R1) und gleich dem zweiten Radius (R2) ist.

5. Verriegelungsvorrichtung nach einem der vorhergehenden Ansprüche, wobei die erste Kurvenbahn (63) einen ersten Endanschlag aufweist und/oder wobei die zweite Kurvenbahn (64) einen zweiten Endanschlag aufweist.

6. Verriegelungsvorrichtung nach einem der vorhergehenden Ansprüche, wobei sich die erste Kurvenbahn (63) und die zweite Kurvenbahn (64) an einem Schnittpunkt schneiden.

7. Verriegelungsvorrichtung nach einem der vorhergehenden Ansprüche, wobei die erste Kurvenbahn (63) und die zweite Kurvenbahn (64) eine Öffnung (65) aufweisen.

8. Verriegelungsvorrichtung nach einem der vorhergehenden Ansprüche, ferner umfassend ein Sicherungselement (7), welches am Hebel (42) angeordnet ist und eingerichtet ist, die Verriegelungsvorrichtung in einem Ausgangszustand zu sichern.

9. Verriegelungsvorrichtung nach Anspruch 8, wobei das am Hebel (42) angeordnete Sicherungselement (7) entfernbar vom Hebel (42) ist.

10. Verriegelungsvorrichtung nach einem der vorhergehenden Ansprüche, ferner umfassend einen Anschlag (43) an der Grundplatte (41) welcher eine maximale Schwenkbewegung des Hebels (42) begrenzt.

11. Verriegelungsvorrichtung nach Anspruch 10, wobei das Sicherungselement (7) eingerichtet ist, am Anschlag (43) anzuschlagen und die maximale Schwenkbewegung des Hebels (42) zu begrenzen.

12. Verriegelungsvorrichtung nach einem der vorhergehenden Ansprüche, ferner umfassend eine Rastvorrichtung (9), um den Hebel (42) an der Grundplatte (41) lösbar zu verrasten und/oder ferner umfassend ein Schloss, um den Hebel (42) an der Grundplatte (41) zu sichern.

13. Elektrischer Energiespeicher eines Zweiradfahrzeugs, insbesondere eines Fahrrads mit elektrischem Antrieb, umfassend eine Verriegelungsvorrichtung gemäß einem der vorangehenden Ansprüche.

14. Zweiradfahrzeug, insbesondere Fahrrad mit elektrischen Antrieb (2), umfassend einen elektrischen Energiespeicher (3) und eine Verriegelungsvorrichtung (4) gemäß einem der Ansprüche 1 bis 12.

## Claims

1. Locking device for fastening an electrical energy store (3) to a frame (20) of a two-wheeled vehicle, **characterized by**:
- a lever arrangement (40) with a base plate (41), a lever (42) and a slot guide (6) between the base plate (41) and the lever (42),
- wherein the slot guide (6) has a first bearing axis (61) and a second bearing axis (62) as well as a first cam track (63) and a second cam track (64),
- wherein the lever (42) is configured, by means of the slot guide (6), to pivot about the base plate (41) in such a manner that the lever (42) executes a first pivoting action exclusively about the first bearing axis (61) and subsequently executes a second pivoting action exclusively about the second bearing axis (62).

2. Locking device according to Claim 1, wherein each of the first cam track (63) and the second cam track (64) is a continuous arc.

3. Locking device according to Claim 2, wherein a first radius (R1) of the first cam track (63) is equal to a second radius (R2) of the second cam track (64).

4. Locking device according to Claim 3, wherein a distance (A) between the first bearing axis (61) and the second bearing axis (62) is equal to the first radius (R1) and equal to the second radius (R2).

5. Locking device according to one of the preceding claims, wherein the first cam track (63) has a first end stop and/or wherein the second cam track (64) has a second end stop.

6. Locking device according to one of the preceding claims, wherein the first cam track (63) and the second cam track (64) intersect at a point of intersection.

7. Locking device according to one of the preceding claims, wherein the first cam track (63) and the second cam track (64) have an opening (65).

8. Locking device according to one of the preceding claims, further comprising a securing element (7), which is arranged on the lever (42) and is configured to secure the locking device in an initial state.

9. Locking device according to Claim 8, wherein the securing element (7) arranged on the lever (42) can be removed from the lever (42).

10. Locking device according to one of the preceding claims, further comprising a stop (43), which delimits a maximum pivoting movement of the lever (42), on the base plate (41).

11. Locking device according to Claim 10, wherein the securing element (7) is configured to abut against the stop (43) and to delimit the maximum pivoting movement of the lever (42).

12. Locking device according to one of the preceding claims, further comprising a latching device (9), in order to detachably latch the lever (42) to the base plate (41) and/or further comprising a lock, in order to secure the lever (42) to the base plate (41).

13. Electrical energy store of a two-wheeled vehicle, in particular of a bicycle with an electric drive, comprising a locking device according to one of the preceding claims.

14. Two-wheeled vehicle, in particular a bicycle with an electric drive (2), comprising an electrical energy store (3) and a locking device (4) according to one of Claims 1 to 12.

## Revendications

1. Dispositif de verrouillage pour fixer un accumulateur d'énergie électrique (3) à un cadre (20) d'un véhicule à deux roues, **caractérisé par** :
- un agencement de levier (40) avec une plaque de base (41), un levier (42) et un guide à coulisse (6) entre la plaque de base (41) et le levier (42),
- le guide à coulisse (6) présentant un premier axe de palier (61) et un deuxième axe de palier (62) ainsi qu'une première piste de came (63) et une deuxième piste de came (64),
- dans lequel le levier (42) est adapté au moyen du guide à coulisse (6) pour pivoter autour de la plaque de base (41) de telle sorte que le levier (42) effectue une première opération de pivotement exclusivement autour du premier axe de palier (61) et effectue ensuite une deuxième opération de pivotement exclusivement autour du deuxième axe de palier (62).

2. Dispositif de verrouillage selon la revendication 1, dans lequel la première piste de came (63) et la deuxième piste de came (64) sont chacune un arc ininterrompu.

3. Dispositif de verrouillage selon la revendication 2, dans lequel un premier rayon (R1) de la première piste de came (63) est égal à un deuxième rayon (R2) de la deuxième piste de came (64).

4. Dispositif de verrouillage selon la revendication 3, dans lequel une distance (A) entre le premier axe de palier (61) et le deuxième axe de palier (62) est égale au premier rayon (R1) et égale au deuxième rayon (R2).

5. Dispositif de verrouillage selon l'une quelconque des revendications précédentes, dans lequel la première piste de came (63) présente une première butée d'extrémité et/ou dans lequel la deuxième piste de came (64) présente une deuxième butée d'extrémité.

6. Dispositif de verrouillage selon l'une quelconque des revendications précédentes, dans lequel la première piste de came (63) et la deuxième piste de came (64) se croisent en un point d'intersection.

7. Dispositif de verrouillage selon l'une quelconque des revendications précédentes, dans lequel la première piste de came (63) et la deuxième piste de came (64) présentent une ouverture (65).

8. Dispositif de verrouillage selon l'une quelconque des revendications précédentes, comprenant en outre un élément de sécurisation (7) qui est agencé sur le levier (42) et qui est adapté pour sécuriser le dispositif de verrouillage dans un état initial.

9. Dispositif de verrouillage selon la revendication 8, dans lequel l'élément de sécurisation (7) agencé sur le levier (42) peut être retiré du levier (42).

10. Dispositif de verrouillage selon l'une quelconque des revendications précédentes, comprenant en outre une butée (43) sur la plaque de base (41) qui limite un mouvement de pivotement maximal du levier (42).

11. Dispositif de verrouillage selon la revendication 10, dans lequel l'élément de sécurisation (7) est adapté pour venir en butée contre la butée (43) et pour limiter le mouvement de pivotement maximal du levier (42).

12. Dispositif de verrouillage selon l'une quelconque des revendications précédentes, comprenant en outre un dispositif d'encliquetage (9) pour encliqueter de manière libérable le levier (42) sur la plaque de base (41) et/ou comprenant en outre un verrou pour sécuriser le levier (42) sur la plaque de base (41).

13. Accumulateur d'énergie électrique d'un véhicule à deux roues, notamment d'une bicyclette à entraînement électrique, comprenant un dispositif de verrouillage selon l'une quelconque des revendications précédentes.

14. Véhicule à deux roues, notamment bicyclette à entraînement électrique (2), comprenant un accumulateur d'énergie électrique (3) et un dispositif de verrouillage (4) selon l'une quelconque des revendications 1 à 12.
